# EUROPEAN PATENT SPECIFICATION

(11) **EP 0 758 156 B1**
(45) Date of publication and mention of the grant of the patent: **22.11.2000**
(21) Application number: 96305867.2
(22) Date of filing: 09.08.1996
(51) Int. Cl.: H02K 5/173

(54) **Electric drive motor with a compound bearing assembly**
Elektrischer Antriebsmotor mit mehrteiligem Lager
Moteur électrique d'entraînement muni d'un palier composé

(30) Priority: 09.08.1995 JP 22476195; 09.08.1995 JP 22476295
(43) Date of publication of application: 12.02.1997
(60) Divisional application: 99108655.4
(73) Proprietor: MINEBEA KABUSHIKI-KAISHA, Kitasaku-gun, Nagano-ken (JP)
(72) Inventor: Obara, Rikuro, c/o Minebea Kabu.-Kaisha, Kitasaku-gun, Nagano-ken (JP)
(74) Representative: Warren, Anthony Robert

(56) References cited:
- EP-A- 0 592 214
- EP-A- 0 597 678
- EP-A- 0 620 633
- GB-A- 2 185 790
- US-A- 5 200 866

## Description

The present invention relates to an electric drive motor with a compound bearing assembly used in rotating portions of a computer and its peripheral devices.

In the motor used in the computer and its peripheral devices, the bearing assembly is mounted between a motor shaft and a hub portion of a rotor.

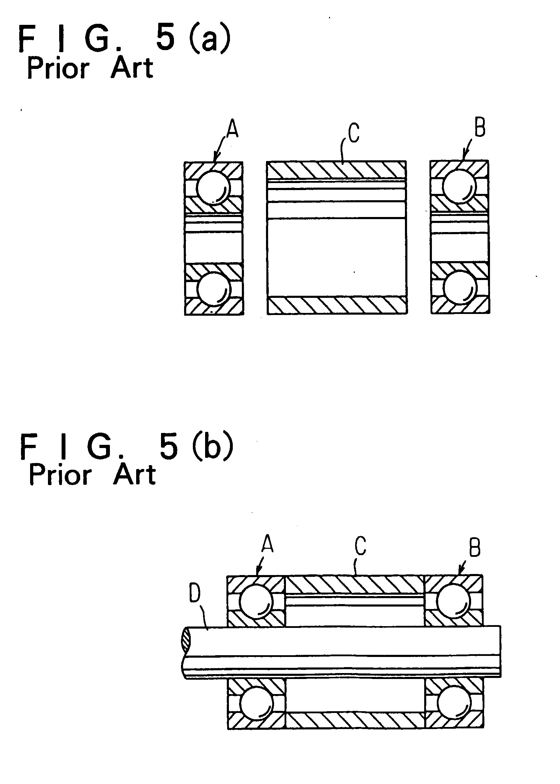

In a conventional compound bearing assembly, as shown in Fig. 5(a), a pair of conventional ball bearing units A,B and a sleeve-like spacer C are separately produced and delivered to a user such as a motor manufacturer who in turn mounts these delivered components A, B, C on a motor shaft D of an electrical drive motor to assemble a compound bearing assembly, as shown in Fig. 5(b).

As described above, in a conventional bearing assembly, it is necessary for the user or customer, such as the manufacturer or assembler of the computers or peripheral devices, to mount a pair of conventional ball bearing units A, B and a spacer C on the motor shaft D with the ball bearing units A, B spaced apart from each other by the spacer C. Consequently, the conventional bearing assembly suffers from the following problems:
(a) While it needs to provide sufficient rigidity, the motor shaft D is also required to have an outer diameter which is small enough to cooperate with the inner race rings of the ball bearing units A, B;
(b) Since the spacer C is a separate component independent of the pair of ball bearing units A and B, it is necessary for the opposite end surfaces of the spacer C to be machined or otherwise worked to improve their mutual parallelism and also their flatness, in relation to the dimensions of the ball bearing units A, B being assembled together with the spacer C;
(c) Since the spacer C is merely sandwiched between the race rings of the two ball bearing units A and B, it is necessary for the user to coaxially mount the spacer C on the motor shaft D with a high degree of accuracy. Also the user must ensure that the axially opposite end surfaces of the spacer C are brought into contact with the corresponding axially inward end surfaces of the outer race rings uniformly, which involves the user in cumbersome machining and assembling works; and
(d) Unless all the above requirements are fulfilled, the motor suffers from vibrations, and therefore performs poorly.

It is an object of the present invention to solve the above problems by providing an electric drive motor with a compound bearing assembly in which a plurality of components of the bearing assembly are already assembled to release the user of the bearing assembly (i.e. motor manufacturers) from its cumbersome assembling work, which enables the user to provide a high-performance electric drive motor.

A further example of a prior art electric drive motor is described in Patent EP-A1-0620633 (on which the pre-characterising parts of the independent claims are based). The motor described in EP-A1-0620633 comprises an electric drive motor with a compound bearing assembly comprising:
a stepped-diameter shaft provided with a first portion having a larger diameter than a second portion of the shaft and an annular inner raceway groove formed directly in the outer peripheral surface of said larger-diameter portion, said smaller-diameter portion being fitted in an annular inner race ring;
a plurality of first balls rotatably mounted in said inner raceway groove of said large-diameter portion of said shaft; and
a plurality of second balls rotatably mounted in an annular inner raceway groove formed in the outer peripheral surface of said inner race ring;
whereby said compound bearing assembly is assembled from the above-enumerated components;
said compound bearing assembly having a base-end portion of said large-diameter portion thereof fixedly mounted on a base member of a motor substantially at right angles to permit said shaft to extend upwardly and
said compound bearing assembly being fixedly mounted in a central hub portion of a rotor of said motor.

According to a first aspect of the invention there is provided an electric drive motor with a compound bearing assembly comprising:
a stepped-diameter shaft provided with a first portion having a larger diameter than a second portion of the shaft and an annular inner raceway groove formed directly in the outer peripheral surface of said larger-diameter portion, said smaller-diameter portion being fitted in an annular inner race ring;
a plurality of first balls rotatably mounted in said inner raceway groove of said large-diameter portion of said shaft; and
a plurality of second balls rotatably mounted in an annular inner raceway groove formed in the outer peripheral surface of said inner race ring;
whereby said compound bearing assembly is assembled from the above-enumerated components;
said compound bearing assembly having a base-end portion of said large-diameter portion thereof fixedly mounted on a base member of a motor substantially at right angles to permit said shaft to extend upwardly and
said compound bearing assembly being fixedly mounted in a central hub portion of a rotor of said motor,
characterised in that said bearing assembly further comprises:
a single-piece short outer race ring having an outer raceway groove formed in its inner peripheral surface; and
an elongated sleeve-like outer race ring partially covering said stepped-diameter shaft and axially abutting said single-piece short outer race ring with one of its axially opposite end portions, the other of which has its inner peripheral surface directly formed into an annular outer raceway groove, wherein:
said first balls, which are rotatably mounted in said inner raceway groove of said large diameter shaft portion are held by said outer raceway groove of said short outer race ring; and
said second balls, which are rotatably mounted in said inner raceway groove of said inner race ring are held by said outer raceway groove formed directly in the inner peripheral surface of said sleeve-like outer race ring.

According to a second aspect of the invention there is provided an electric drive motor with a compound bearing assembly comprising:
a stepped-diameter shaft provided with a first portion having a larger diameter than a second portion of the shaft and an annular inner raceway groove formed directly in the outer peripheral surface of said larger-diameter portion, said smaller-diameter portion being fitted in an annular inner race ring;
a plurality of first balls rotatably mounted in said inner raceway groove of said large-diameter portion of said shaft; and
a plurality of second balls rotatably mounted in an annular inner raceway groove formed in the outer peripheral surface of said inner race ring;
whereby said compound bearing assembly is assembled from the above-enumerated components;
said compound bearing assembly having a base-end portion of said large-diameter portion thereof fixedly mounted on a base member of a motor substantially at right angles to permit said shaft to extend upwardly and
said compound bearing assembly being fixedly mounted in a central hub portion of a rotor of said motor,
characterised in that said bearing assembly further comprises:
a single-piece short outer race ring having an outer raceway groove formed in its inner peripheral surface; and
an elongated sleeve-like outer race ring partially covering said stepped-diameter shaft and axially abutting said single-piece short outer race ring with one of its axially opposite end portions the other of which has its inner peripheral surface directly formed into an annular outer raceway groove, wherein:
said first balls, which are rotatably mounted in said inner raceway groove of said larger diameter shaft portion are held by said outer raceway groove formed in the inner peripheral surface of said sleeve-like outer race ring; and
said second balls, which are rotatably mounted in said inner raceway groove of said inner race ring are held by said outer raceway groove formed in the inner peripheral surface of said short outer race ring.

Incidentally, in the compound bearing assembly of the motor according to the first aspect of the present invention, an outer diameter of the inner race ring fixedly mounted on the small-diameter portion of the stepped-diameter shaft is equal to that of the large-diameter portion of the stepped-diameter shaft so that all the first and the second balls are the same in diameter.

Further, in embodiments of the compound bearing assembly of the motor according to the first and second aspects of the present invention, an outer diameter of the inner race ring of the ball bearing unit is equal to that of the large-diameter portion of the stepped-diameter shaft, while an outer and an inner diameter of the outer race ring of the ball bearing unit are equal to those of the sleeve-like outer race ring, respectively. Consequently, all the first and the second balls are the same in diameter.

Embodiments of the present invention will now be described, by way of example, with reference to the accompanying drawings, in which:
Fig. 1 is a sectional side view of an electric drive motor, of an outer-rotor type, with a compound bearing assembly in accordance with the first aspect of the present invention;
Fig. 2 is a sectional side view of another electric drive motor, of the outer-rotor type, with a compound bearing assembly in accordance with the second aspect of the present invention,
Fig. 3 is a sectional side view of an electric drive motor, of the inner-rotor type, with a compound bearing assembly in accordance with the first aspect of the present invention,
Fig. 4 is a sectional side view of another electric drive motor of an inner-rotor type, with a compound bearing assembly in accordance with the second aspect of the present invention,
Fig. 5(a) is a sectional side view of a conventional compound bearing assembly prior to assembly, illustrating separated ball bearing units and a spacer; and
Fig. 5(b) is a longitudinal sectional view of the conventional bearing assembly of Fig. 5(a) after assembly, illustrating the ball bearing units and the spacer thus assembled on the motor shaft.

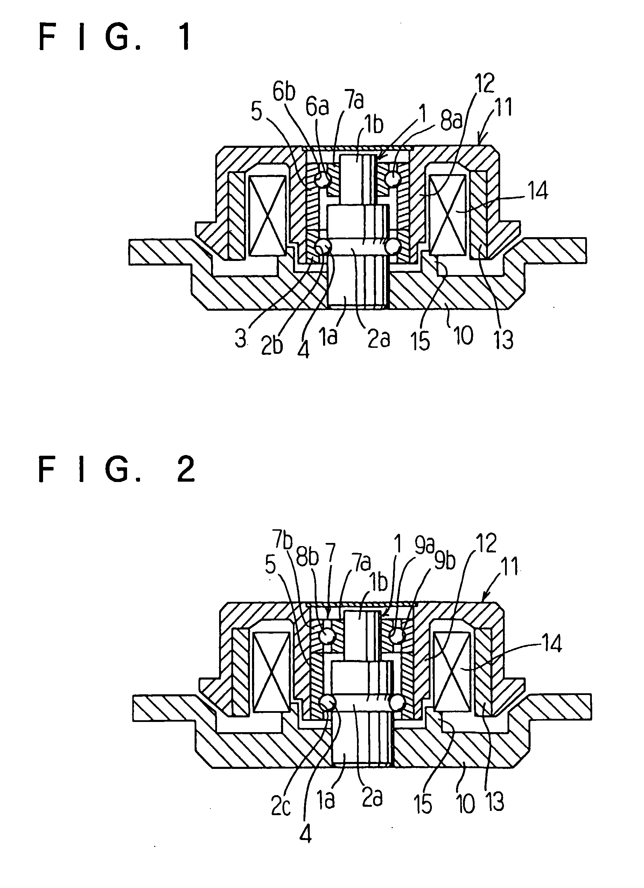

In Fig. 1: a stepped-diameter shaft 1 is provided with a relatively larger-diameter portion la and a relatively smaller-diameter portion 1b. An annular inner raceway groove 2a is formed in the outer peripheral surface of the larger-diameter portion 1a.

An annular outer raceway groove 2b is formed in the inner peripheral surface of a first short outer race ring 3. The first short outer race ring 3 is disposed on the larger-diameter portion la of the shaft 1, so that a plurality of first balls 4 may be rotatably mounted between the outer raceway groove 2b of the race ring 3 and the inner raceway groove 2a of the shaft 1.

A sleeve-like outer race ring 5 is disposed around the shaft 1. An annular outer raceway groove 6b is formed in the inner peripheral surface of an upper-end portion of the outer race ring 5. A plurality of second balls 8a are rotatably mounted between this outer raceway groove 6b and an annular inner raceway groove 6a formed in the outer peripheral surface of an inner race ring 7a which is fixedly mounted on the smaller-diameter portion 1b of the stepped-diameter shaft 1 in an insertion manner.

Further, as is clear from Fig. 1, the outer diameter of the inner race ring 7a is substantially equal to that of the large-diameter portion la of the shaft 1, thus permitting the first and the second balls 4 and 8a to be of the same diameter.

In one method of assembling this motor, the inner race ring 7a is initially slidably mounted on the small-diameter portion 1b of the shaft 1 in an insertion manner, that is the portion 1b is inserted into the race ring 7a. Then, a predetermined pre-load is applied to an upper-end surface of the thus mounted inner race ring 7a. Under such circumstances, the inner race ring 7a is fixed to the small-diameter portion 1b of the shaft 1 by means of a suitable connecting means, such as an adhesive. Thus the inner race ring 7a, first short outer race ring 3 and the sleeve-like outer race ring 5 are successively mounted on the shaft 1 to complete the compound bearing assembly.

Then, a base-end portion of the large-diameter portion la of the shaft 1 is fixedly mounted in a base member 10 of the motor, at right angles, to permit the shaft 1 to extend upward from the base member 10 of the motor. Thus the outer race rings 3 and 5 are firmly fitted in a central hub portion 12 of a rotor 11 of the motor, in an insertion manner, thus completing the electric drive motor with the compound bearing assembly.

Incidentally, the motor of Fig. 1 also comprises a permanent magnet 13; an electric energizing coil 14, wound around a stator yoke (not shown) of the motor; and a yoke holder 15.

Fig. 2 shows a second embodiment of an outer rotor type motor in accordance with the present invention.

In this second embodiment, the annular inner raceway groove 2a is formed in the outer peripheral surface of the large-diameter portion la of the shaft 1, as in the first embodiment.

An annular outer raceway groove 2c is formed in the inner peripheral surface of the lower-end portion of the sleeve-like outer race ring 5, which is disposed around the shaft 1. A plurality of the first balls 4 are rotatably mounted between this outer raceway groove 2c and the inner raceway groove 2a of the larger-diameter portion la of the shaft 1.

A conventional ball bearing unit 7 is provided , which comprises an inner race ring 7a, a second short outer race ring 7b and a plurality of third balls 8b which are rotatably mounted between these race rings 7a, 7b. The inner race ring 7a is again fixedly mounted on the smaller-diameter portion 1b of the shaft 1, in an insertion manner.

Further, the outer diameter of the inner race ring 7a and the diameter of the larger-diameter portion la of the shaft 1 are equal. Also, the outer and inner diameters of the second short outer race ring 7b are equal to those of the sleeve-like outer race ring 5, respectively. Consequently, all the balls 4 and 8b may be of the same diameter.

In one method of assembling this second embodiment, the inner race ring 7a is initially slidably mounted on the small-diameter portion 1b of the shaft 1 in an insertion manner as with the first embodiment. Then the upper-end surface of the race ring 7a is subjected to a predetermined pre-load. Under such circumstances, the inner race ring 7a is fixed to the small-diameter portion 1b of the shaft 1 by means of a suitable connecting means such as an adhesive. Thus the inner race ring 7a, sleeve-like outer race ring 5 and the second short outer race ring 7b are successively mounted on the shaft 1 thus completing the compound bearing assembly.

In the first and second embodiments of the present invention described above, although all the balls 4, 8a, 8b may have the same diameter, it is also possible for the balls to be of any other suitable sizes. For example, the balls used in the large-diameter portion la of the shaft 1 may be different in diameter from those used in the small-diameter portion 1b of the shaft 1.

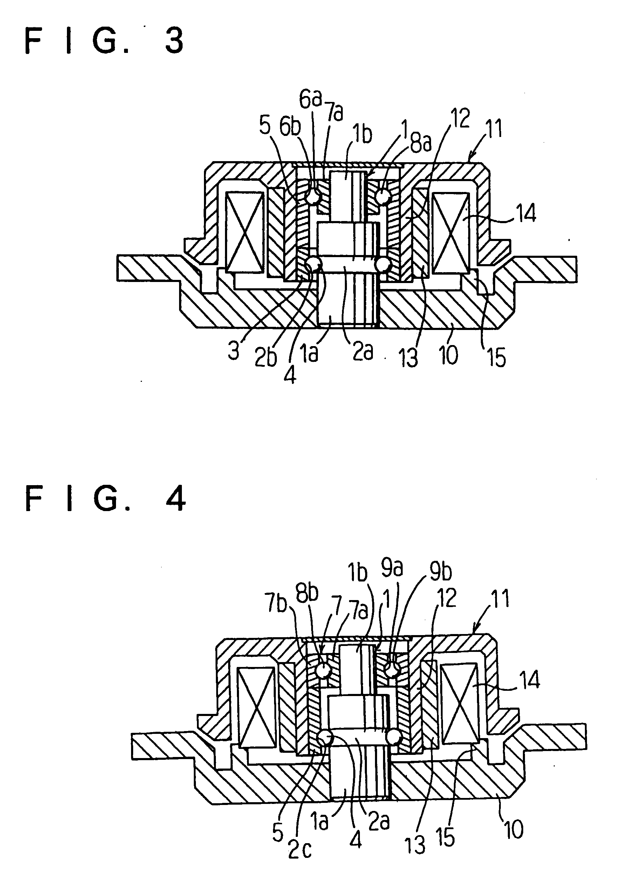

The above description relates to outer-rotor type motors in accordance with the present invention, as shown in Figs. 1 and 2, while the following description relates to a plurality of embodiments of inner-rotor type motors in accordance with the present invention, as shown in Figs. 3 and 4.

In each of the inner-rotor type motors in accordance with the present invention, a permanent magnet 13 is fixedly mounted on another peripheral surface of a central hub portion 12 of a rotor 11 of the motor. The remaining construction is substantially the same as that of each of the embodiments shown in Figs. 1 and 2. More particularly, as for the remaining construction, a third embodiment of the present invention shown in Fig. 3 corresponds to the first embodiment shown in Fig. 1; and fourth embodiment of the present invention shown in Fig. 4 corresponds to the second embodiment shown in Fig. 2.

In electric drive motors in accordance with the present invention, since the compound bearing assemblies thereof have the above construction, the following actions and effects are obtained:
(1) In a motor in accordance with the present invention, since substantially all of the components of the compound bearing assembly, for example, the outer race rings, inner race ring, balls and sleeve have already been assembled into the compound bearing assembly by a bearing manufacturer with a high degree of accuracy, the user or motor manufacturer is relieved of a cumbersome assembly task in assembling the compound bering assembly. The assembly is easily mounted inside a sleeve-like rotating element (i.e. central hub portion 12 of the rotor 11 of the motor) by inserting the assembly into the rotating element and fixing the assembly therein at the user's end;
(2) Since the compound bearing assembly used in a motor in accordance with the present invention uses a stepped-diameter shaft 1 provided with a relatively larger-diameter portion la which has an annular inner raceway groove 2a directly formed in its outer peripheral surface, it is possible for the compound bearing assembly to do without the conventional inner race ring in the large-diameter portion 1a of the stepped-diameter shaft 1. This permits the shaft 1 to be partially increased in diameter, and therefore increases the rigidity of the shaft.
(3) Since the stepped-diameter shaft 1 is provided with a relatively larger-diameter portion la with correspondingly increases rigidity, it is possible to increase the resonance point of an electric drive motor in accordance with the present invention so that such a motor may be prevented from resonating or causing resonance in the remaining components of the motor. Thus the performance and reliability of the motor is improved.
(4) The number of the conventional ball bearing units used in the motor is reduced to one, i.e. the ball bearing unit 7. Consequently, the compound bearing assembly in the motor uses only one inner race ring 7a. Therefore, the number of its components is reduced in comparison with conventional bearing assemblies; and
(5) Since the annular inner raceway groove 2a is directly formed in the outer peripheral surface of the larger-diameter portion la of the shaft 1, no inner race ring is required in the large-diameter portion la of the shaft 1. This enables the outer diameter of the first short outer race ring 3, the sleeve-like outer race ring 5 and the spacer 16 to be reduced in size and, therefore, enabling the size of the motor to be reduced, so as to meet the needs of industry.

## Claims

1. An electric drive motor with a compound bearing assembly comprising:
a stepped-diameter shaft (1) provided with a first portion (la) having a larger diameter than a second portion (1b) of the shaft (1) and an annular inner raceway groove (2a) formed directly in the outer peripheral surface of said larger-diameter portion (1a), said smaller-diameter portion (1b) being fitted in an annular inner race ring (7a);
a plurality of first balls (4) rotatably mounted in said inner raceway groove (2a) of said large-diameter portion (1a) of said shaft (1); and
a plurality of second balls (8a) rotatably mounted in an annular inner raceway groove (6a) formed in the outer peripheral surface of said inner race ring (7a);
whereby said compound bearing assembly is assembled from the above-enumerated components,
said compound bearing assembly having a base-end portion of said large-diameter portion (la) thereof fixedly mounted on a base member (10) of a motor substantially at right angles to permit saidshaft (1) to extend upwardly and
said compound bearing assembly being fixedly mounted in a central hub portion (12) of a rotor (11) of said motor,
CHARACTERISED IN THAT said bearing assembly further comprises :
a single-piece short outer race ring (3) having an outer race way groove (2b) formed in its inner peripheral surface ; and
an elongated sleeve-like outer race ring (5) partially covering said stepped-diameter shaft (1) and axially abuting said single-piece short outer race ring (3) with one of its axially opposite end portions, the other of which has its inner peripheral surface directly formed into an annular outer raceway groove (6b), wherein:
said first balls (4), which are rotatably mounted in said inner raceway groove (2a) of said large diameter shaft portion (1a) are held by said outer raceway groove (2b) of said short outer race ring (3); and
said second balls (8a), which are rotatably mounted in said inner raceway groove (6a) of said inner race ring (7a) are held by said outer raceway groove (6b) formed directly in the inner peripheral surface of said sleeve-like outer race ring (5).

2. An electric drive motor with a compound bearing assembly comprising:
a stepped-diameter shaft (1) provided with a first portion (1a) having a larger diameter than a second portion (1b) of the shaft (1) and an annular inner raceway groove (2a) formed directly in the outer peripheral surface of said larger-diameter portion (1a), said smaller-diameter portion (1b) being fitted in an annular inner race ring (7a) ;
a plurality of first balls (4) rotatably mounted in said inner raceway groove (2a) of said large-diameter portion (1a) of said shaft (1); and
a plurality of second balls (8b) rotatably mounted in an annular inner raceway groove (9a) formed in the outer peripheral surface of said inner race ring (7a);
whereby said compound bearing assembly is assembled from the above-enumerated components,
said compound bearing assembly having a base-end portion of said large-diameter portion (la) thereof fixedly mounted on a base member (10) of a motor substantially at right angles to permit saidShaft (1) to extend upwardly and
said compound bearing assembly being fixedly mounted in a central hub portion (12) of a rotor (11) of said motor,
CHARACTERISED IN THAT said bearing assembly further comprises :
a single-piece short outer race ring (7b) having an outer race way groove (9b) formed in its inner peripheral surface; and
an elongated sleeve-like outer race ring (5) partially covering said stepped-diameter shaft (1) and axially abuting said single-piece short outer race ring (7b) with one of its axially opposite end portions the other of which has its inner peripheral surface directly formed into an annular outer raceway groove (2c), wherein:
said first balls (4) , which are rotatably mounted in said inner raceway groove (2a) of said larger diameter shaft portion (1a) are held by said outer raceway groove (2c) formed in the inner peripheral surface of said sleeve-like outer race ring (5) ; and
said second balls (8b), which are rotatably mounted in said inner raceway groove (9a) of said inner race ring (7a) are held by said outer raceway groove (9b) formed in the inner peripheral surface of said short outer race ring (7b).

## Patentansprüche

1. Elektrischer Antriebsmotor mit einem kombinierten Lagersystem, umfassend:
eine Welle (1) mit gestuftem Durchmesser, die einen ersten Abschnitt (1a) mit einem größeren Durchmesser als ein zweiter Abschnitt (1b) der Welle (1) sowie eine ringförmige innere Laufrille (2a) aufweist, die unmittelbar in der äußeren Umfangsfläche des genannten Abschnitts (1a) mit größerem Durchmesser ausgebildet ist, wobei der genannte Abschnitt (1b) mit kleinerem Durchmesser in einem ringförmigen inneren Laufring (7a) montiert ist;
eine Mehrzahl von ersten Kugeln (4), die drehbar in der genannten inneren Laufrille (2a) des genannten Abschnitts (la) mit größerem Durchmesser der genannten Welle (1) gelagert sind; und
eine Mehrzahl von zweiten Kugeln (8a), die drehbar in einer ringförmigen inneren Laufrille (6a) gelagert sind, die in der äußeren Umfangsfläche des genannten inneren Laufrings (7a) ausgebildet ist;
wobei sich das genannte kombinierte Lagersystem aus den oben aufgezählten Komponenten zusammensetzt,
wobei ein Basisendenabschnitt des genannten Abschnitts (1a) mit großem Durchmesser an dem genannten kombinierten Lagersystem fest an einem Basiselement (10) eines Motors im wesentlichen im rechten Winkel montiert ist, so daß die genannte Welle (1) aufwärts verlaufen kann, und
wobei das genannte kombinierte Lagersystemn fest in einem mittleren Nabenabschnitt (12) eines Rotors (11) des genannten Motors montiert ist,
dadurch gekennzeichnet, daß das genannte Lagersystem ferner folgendes umfaßt:
einen einstückigen kurzen äußeren Laufring (3) mit einer äußeren Laufrille (26), die in seiner inneren Umfangsfläche ausgebildet ist; und
wobei ein länglicher hülsenähnlicher äußerer Laufring (5) die genannte Welle (1) mit gestuftem Durchmesser teilweise bedeckt und den genannten einstückigen kurzen äußeren Laufring (3) mit einem seiner axial gegenüberliegenden Abschnitte axial aneinanderfügt, wobei die innere Umfangsfläche von dessen anderem Abschnitt unmittelbar in eine ringförmige äußere Laufrille (6b) eingeformt ist, wobei:
die genannten ersten Kugeln (4), die drehbar in der genannten inneren Laufrille (2a) des genannten Wellenabschnitts (1a) mit dem genannten großen Durchmesser gelagert sind, von der genannten äußeren Laufrille (2b) des genannten kurzen äußeren Laufrings (3) gehalten werden; und
die genannten zweiten Kugeln (8a), die drehbar in der genannten inneren Laufrille (6a) des genannten inneren Laufrings (7a) gelagert sind, durch die genannte äußere Laufrille (6b) gehalten werden, die unmittelbar in der inneren Umfangsfläche des genannten hülsenähnlichen äußeren Laufrings (5) ausgebildet ist.

2. Elektrischer Antriebsmotor mit einem kombinierten Lagersystem, umfassend:
eine Welle (1) mit gestuftem Durchmesser, die einen ersten Abschnitt (1a) mit einem größeren Durchmesser als ein zweiter Abschnitt (1b) der Welle (1) sowie eine ringförmige innere Laufrille (2a) aufweist, die unmittelbar in der äußeren Umfangsfläche des genannten Abschnitts (1a) mit größerem Durchmesser ausgebildet ist, wobei der genannte Abschnitt (1b) mit kleinerem Durchmesser in einem ringförmigen inneren Laufring (7a) montiert ist;
eine Mehrzahl von ersten Kugeln (4), die drehbar in der genannten inneren Laufrille (2a) des genannten Abschnitts (1a) mit größerem Durchmesser der genannten Welle (1) gelagert sind; und
eine Mehrzahl von zweiten Kugeln (8b), die drehbar in einer ringförmigen inneren Laufrille (9a) gelagert sind, die in der äußeren Umfangsfläche des genannten inneren Laufrings (7a) ausgebildet ist;
wobei sich das genannte kombinierte Lagersystem aus den oben aufgezählten Komponenten zusammensetzt,
wobei ein Basisendenabschnitt des genannten Abschnitts (1a) mit großem Durchmesser an dem genannten kombinierten Lagersystem fest an einem Basiselement (10) eines Motors im wesentlichen im rechten Winkel montiert ist, so daß die genannte Welle (1) aufwärts verlaufen kann, und
wobei das genannte kombinierte Lagersystem fest in einem mittleren Nabenabschnitt (12) eines Rotors (11) des genannten Motors montiert ist,
dadurch gekennzeichnet, daß das genannte Lagersystem ferner folgendes umfaßt:
einen einstückigen kurzen äußeren Laufring (7b) mit einer äußeren Laufrille (9b), die in seiner inneren Umfangsfläche ausgebildet ist; und
wobei ein länglicher hülsenähnlicher äußerer Laufring (5) die genannte Welle (1) mit gestuftem Durchmesser teilweise bedeckt und den genannten einstückigen kurzen äußeren Laufring (7b) mit einem seiner axial gegenüberliegenden Abschnitte axial aneinanderfügt, wobei die innere Umfangsfläche von dessen anderem Abschnitt unmittelbar in eine ringförmige äußere Laufrille (2c) eingeformt ist, wobei:
die genannten ersten Kugeln (4), die drehbar in der genannten inneren Laufrille (2a) des genannten Wellenabschnitts (1a) mit dem genannten größeren Durchmesser gelagert sind, von der genannten äußeren Laufrille (2c) gehalten werden, die in der inneren Umfangsfläche des genannten hülsenähnlichen äußeren Laufrings (5) ausgebildet ist; und
die genannten zweiten Kugeln (8b), die drehbar in der genannten inneren Laufrille (9a) des genannten inneren Laufrings (7a) gelagert sind, durch die genannte äußere Laufrille (9b) gehalten werden, die in der inneren Umfangsfläche des genannten kurzen äußeren Laufrings (7b) ausgebildet ist.

## Revendications

1. Un moteur à commande électrique avec un ensemble à palier composite englobant :
un arbre à diamètre échelonné (1) doté d'une première partie (1a) ayant un diamètre plus grand qu'une seconde partie (1b) de l'arbre (1) et une rainure de voie de roulement intérieure annulaire (2a) formée directement dans la surface périphérique extérieure de ladite partie à plus grand diamètre (1a), ladite partie à plus petit diamètre (1b) étant placée dans une bague de roulement intérieure annulaire (7a) ;
une pluralité de premières billes (4) montées de façon rotative dans ladite rainure de voie de roulement intérieure (2a) de ladite partie de grand diamètre (1a) dudit arbre (1) ; et
une pluralité de secondes billes (8a) montées de manière rotative dans une rainure de voie de roulement intérieure annulaire (6a) formée dans la surface périphérique extérieure de ladite bague de roulement intérieure (7a) ;
ledit ensemble à palier composite étant assemblé à partir des sous-ensembles énumérés ci-avant,
ledit ensemble à palier composite ayant une partie d'extrémité de base de ladite partie à grand diamètre (1a) de celui-ci montée de façon fixe sur un élément de base (10) d'un moteur sensiblement perpendiculairement pour permettre audit arbre (1) de s'étendre vers le haut, et
ledit ensemble à palier composite étant monté de façon fixe dans un moyeu central (12) d'un rotor (11) dudit moteur,
caractérisé en ce que ledit ensemble à palier englobe de plus :
une bague de roulement extérieure courte monobloc (3) ayant une rainure de roulement extérieure (2b) formée dans sa surface périphérique intérieure ; et
une bague de roulement extérieure allongée en forme de douille (5) qui recouvre en partie ledit arbre à diamètre échelonné (1) et qui bute axialement contre ladite bague de roulement extérieure courte monobloc (3) avec l'une de ses parties d'extrémité opposée axialement, l'autre de celles-ci ayant sa surface périphérique intérieure formée directement en une rainure de voie de roulement extérieure annulaire (6b) ;
dans lequel :
lesdites premières billes (4), qui sont montées de façon rotative dans ladite rainure de voie de roulement intérieure (2a) de ladite partie d'arbre à grand diamètre (1a), sont maintenues par ladite rainure de voie de roulement extérieure (2b) de ladite bague de roulement extérieure courte (3) ; et
lesdites secondes billes (8a), qui sont montées de façon rotative dans ladite rainure de voie de roulement intérieure (6a) de ladite bague de roulement intérieure (7a), sont maintenues par ladite rainure de voie de roulement extérieure (6b) formée directement dans la surface périphérique intérieure de ladite bague de roulement extérieure semblable à une douille (5).

2. Un moteur à commande électrique avec un ensemble à palier composite englobant :
un arbre à diamètre échelonné (1) doté d'une première partie (1a) ayant un diamètre plus grand qu'une seconde partie (1b) de l'arbre (1) et un chemin de roulement intérieur annulaire (2a) formé directement dans la surface périphérique extérieure de ladite partie à plus grande diamètre (1a), ladite partie à plus petit diamètre (1b) étant placée dans une bague de roulement intérieure annulaire (7a) ;
une pluralité de premières billes (4) montées de façon rotative dans ladite rainure de voie de roulement intérieure (2a) de ladite portion de grand diamètre (la) dudit arbre (1) ; et
une pluralité de secondes billes (8b) montées de manière rotative dans une rainure de voie de roulement intérieure annulaire (9a) formée dans la surface périphérique extérieure de ladite bague de roulement intérieure (7a) ;
ledit ensemble à palier composite étant assemblé à partir des sous-ensembles énumérés ci-avant,
ledit ensemble à palier composite ayant une partie d'extrémité de base de ladite partie à grand diamètre (1a) de celui-ci montée de façon fixe sur un élément de base (10) d'un moteur sensiblement perpendiculaire pour permettre audit arbre (1) de s'étendre vers le haut, et
ledit ensemble à palier composite étant monté de façon fixe dans un moyeu central (12) d'un rotor (11) dudit moteur,
caractérisé en ce que ledit ensemble à palier composite englobe de plus :
une bague de roulement extérieure courte monobloc (7b) ayant une rainure de roulement extérieure (9b) formée dans sa surface périphérique intérieure ; et
une bague de roulement extérieure allongée en forme de douille (5) qui recouvre en partie ledit arbre à diamètre échelonné (1) et qui bute axialement contre ladite bague de roulement extérieure courte monobloc (7b) avec l'une de ses parties d'extrémité opposée axialement, l'autre de celles-ci ayant sa surface périphérique intérieure formée directement en une rainure de voie de roulement extérieure annulaire (2c) ;
dans lequel :
lesdites premières billes (4), qui sont montées de façon rotative dans ladite rainure de voie de roulement intérieure (2a) de ladite partie d'arbre à grand diamètre (1a) sont maintenues par ladite rainure de voie de roulement extérieure (2c) formée dans la surface périphérique intérieure de ladite bague de roulement extérieure semblable à une douille (5) ; et
lesdites secondes billes (8b) qui sont montées de façon rotative dans ladite rainure de voie de roulement intérieure (9a) de ladite bague de roulement intérieure (7a) sont maintenues par ladite rainure de voie de roulement extérieure (9b) formée dans la surface périphérique intérieure de ladite seconde bague de roulement extérieure courte (7b).
